# EUROPEAN PATENT SPECIFICATION

(11) **EP 3 684 903 B1**
(45) Date of publication and mention of the grant of the patent: **14.07.2021**
(21) Application number: 18789251.8
(22) Date of filing: 19.09.2018
(51) Int. Cl.: C11D 17/04, B65D 81/32, B65D 65/46

(54) **POUCHED UNIT AND METHOD OF USING SAID POUCHED UNIT**
BEUTELEINHEIT UND VERFAHREN ZUR VERWENDUNG DIESER BEUTELEINHEIT
UNITÉ ENSACHÉE ET PROCÉDÉ D'UTILISATION DE LADITE UNITÉ ENSACHÉE

(30) Priority: 19.09.2017 NL 2019573
(43) Date of publication of application: 29.07.2020
(73) Proprietor: Eme Engel Machinefabriek En Engineering B.V., 1508 EV Zaandam (NL)
(72) Inventor: BOOD, Arie, 1508 EV Zaandam (NL)
(74) Representative: EP&C
(86) International application number: PCT/NL2018/050618
(87) International publication number: WO 2019/059763

(56) References cited:
- EP-A1- 3 025 848
- WO-A1-02/40370
- WO-A1-89/04282
- WO-A1-02/053696
- WO-A1-2015/150231
- WO-A1-2016/054459
- DE-A1- 10 000 354
- US-A1- 2003 092 590

## Description

### FIELD OF THE INVENTION

The invention relates to a pouched unit comprising a dose of a substance which is enveloped by a main part of a pouch made from a water soluble material. In practice, such a pouched unit is often used for detergents, like a laundry detergent.

### BACKGROUND OF THE INVENTION

WO 89/04282 discloses a pouched unit in the form of a water-soluble packaging containing e.g. a liquid flavouring or sweetener for adding to water as a unit dose in order to form a beverage.

The invention is based on the insight that there is a need for a different type of pouched product. In addition, there is a need to have the possibility to add a functionality to the pouched unit.

### SUMMARY OF THE INVENTION

The invention has the objective to provide an improved or at least alternative pouched unit. This objective is reached by a pouched unit comprising a dose of a substance which is enveloped by a main part of a pouch made from a water soluble material, wherein the pouch comprises a secondary part made from the water soluble material, the secondary part is attached to the main part via a weaker area of the water soluble material, which weaker area is configured to allow manual separation of the secondary part from the main part, and the substance comprises a food material.

The secondary part allows that a functionality can be added to pouched unit. The weaker area allows that the additional water soluble material of the secondary part of the pouch can manually be removed before the main part of the pouch and its dose of substance is used. This way it is prevented that the user is forced to consume, such as eat or drink, the water soluble material of the secondary part of the pouch.

In an embodiment of the pouched unit, the substance consists of the food material. This means that the substance only contains food material.

In an embodiment of the pouched unit, the pouch has a lower tensile strength at the weaker area when compared with the main part and the secondary part.

In an embodiment of the pouched unit, the secondary part extends away from the main part.

In an embodiment of the pouched unit, the secondary part comprises a functionality, such as a message or a flavouring for the food material.

In an embodiment of the pouched unit, a message is provided on the secondary part.

In an embodiment of the pouched unit, the message comprises a text or a symbol.

In an embodiment of the pouched unit, the message is provided on the secondary part by a colourant.

In an embodiment of the pouched unit, the message is provided on the secondary part by a relief.

In an embodiment of the pouched unit, the secondary part comprises a flavouring for the food material.

In an embodiment of the pouched unit, the flavouring comprises a container formed by the water soluble material of the secondary part and the container holds a flavouring fluid, such as a flavouring liquid, or a flavouring powder.

In an embodiment of the pouched unit, the flavouring fluid of flavouring powder is a different material than the food material of the dose of substance.

In an embodiment of the pouched unit, the secondary part comprises a mouth freshener. In an embodiment of the pouched unit, the water soluble material has been subjected to a weakening treatment at the weaker area.

In an embodiment of the pouched unit, the weaker area comprises one incision or multiple incisions in the water soluble material.

In an embodiment of the pouched unit, the pouch is only formed by the water soluble material.

In an embodiment of the pouched unit, the pouch is formed by at least two interconnected films of the water soluble material.

In an embodiment of the pouched unit, the main part comprises a main peripheral rim, the secondary part comprises a secondary peripheral rim, the at least two films are connected to each other at the main peripheral rim, the weaker area and the secondary peripheral rim, and the weaker area is located between the main peripheral rim and the secondary peripheral rim.

In an embodiment of the pouched unit, the main peripheral rim surrounds the substance and the secondary peripheral rim surrounds the message.

In an embodiment of the pouched unit, at least one recess is provided in the two interconnected films adjacent to the weaker area, and the recess extends between the main peripheral rim and the secondary peripheral rim.

In an embodiment of the pouched unit, a first recess and a second recess is provided in the two interconnected films adjacent to the weaker area, the first recess and the second recess extend between the main peripheral rim and the secondary peripheral rim, and the weaker area is located between the first recess and the second recess.

In an embodiment of the pouched unit, the weaker area is located between a main side part of the main peripheral rim and a secondary side part of the secondary peripheral rim, the main side part and the secondary side part extend in a side part direction, and the weaker area extends over a smaller distance in the side part direction than each of the main side part and the secondary side part.

In an embodiment of the pouched unit, the water soluble material is nontoxic.

In an embodiment of the pouched unit, the water soluble material is eatable.

In an embodiment of the pouched unit, the substance is a water soluble substance.

In an embodiment of the pouched unit, the water soluble material is drinkable when dissolved in a liquid.
The invention further relates to a method of using a pouched unit according to the invention. Said method comprises holding the main part of the pouch in one hand and holding the secondary part of the pouch in another hand, and manually separating the secondary part from the main part at the weaker area.
In an embodiment of the method, the method comprises eating the separated main part of the pouch and the dose of the substance.

In an embodiment of the method, the method comprises placing the separated main part of the pouch in a liquid, and drinking the main part of the pouch being dissolved in the liquid and the dose of substance.

In an embodiment of the method, the secondary part comprises a flavouring, and the method comprises placing at least part of the flavouring of the secondary part on the main part after the secondary part has been manually separated from the main part.

In an embodiment of the method, the method comprises disposing the secondary part of the pouch.

### BRIEF DESCRIPTION

Embodiments of the pouched unit and the method according to the invention will be described by way of example only, with reference to the accompanying schematic drawings in which corresponding reference symbols indicate corresponding parts, and in which:
Figure 1A schematically shows a front view of a first embodiment of the pouched unit according to the invention,
Figure 1B schematically shows a front view of the pouched unit of fig. 1A, wherein the main part and the secondary part have been manually separated,
Figure 1C schematically shows a view in perspective of the pouched unit of fig. 1A,
Figure 2 schematically shows a view in cross section along line II-II of the pouched unit of fig. 1A,
Figure 3A schematically shows a front view in a second embodiment of the pouched unit according to the invention,
Figure 3B schematically shows a front view of the pouched unit of fig. 3A, wherein the main part and the secondary part have been manually separated,
Figure 3C schematically shows a view in perspective of the pouched unit of fig. 3A,
Figure 4A schematically shows a front view in a third embodiment of the pouched unit according to the invention,
Figure 4B schematically shows a front view of the pouched unit of fig. 4A, wherein the main part and the secondary part have been manually separated, and
Figure 4C schematically shows a view in perspective of the pouched unit of fig. 4A.,
Figure 5A schematically shows a front view in a fourth embodiment of the pouched unit according to the invention,
Figure 5B schematically shows a front view of the pouched unit of fig. 5A, wherein the main part and the secondary part have been manually separated, and
Figure 5C schematically shows a view in perspective of the pouched unit of fig. 5A.

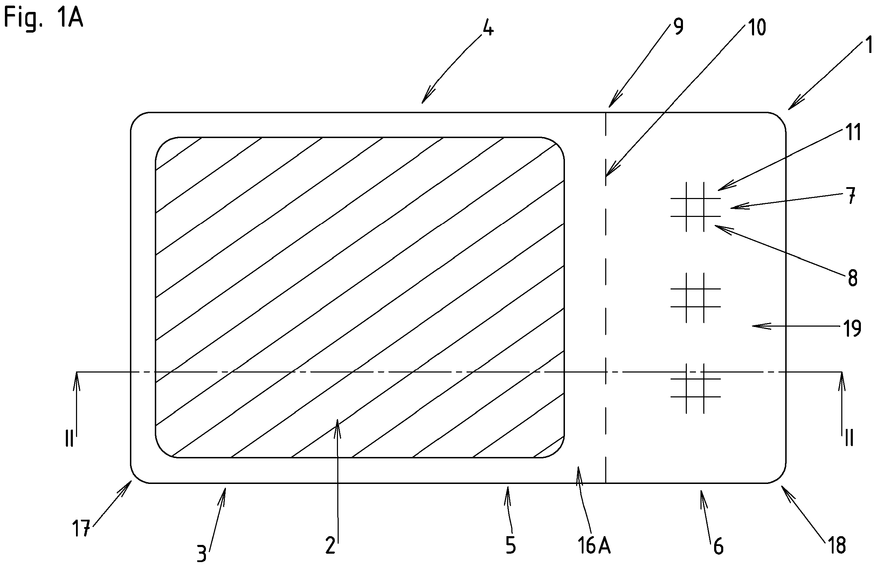

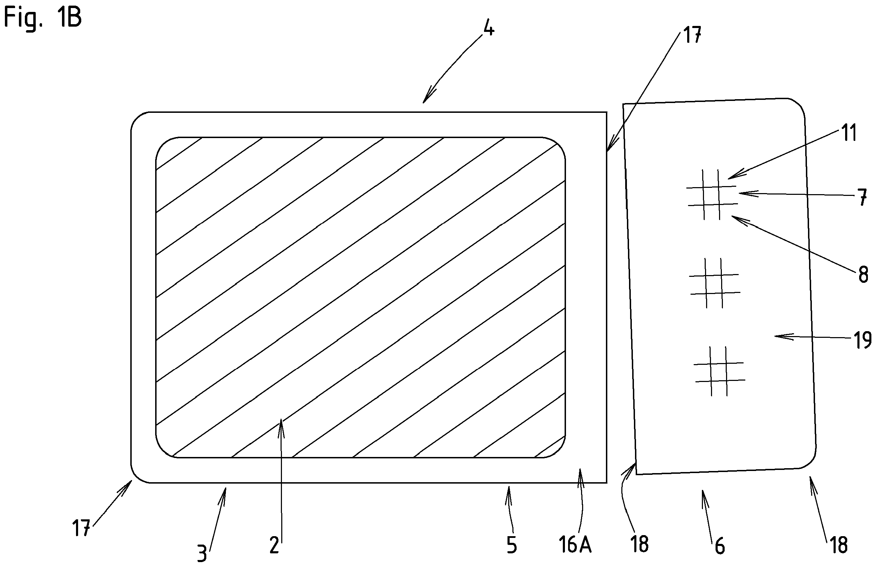

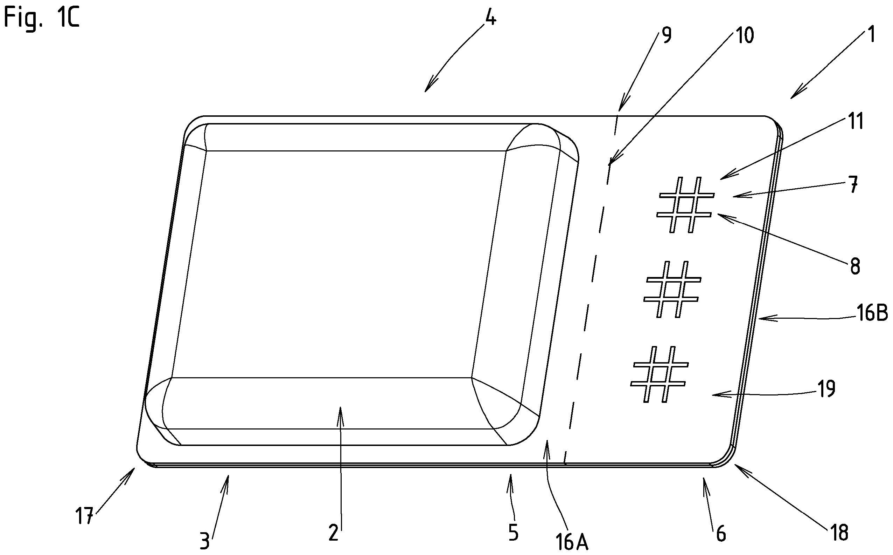

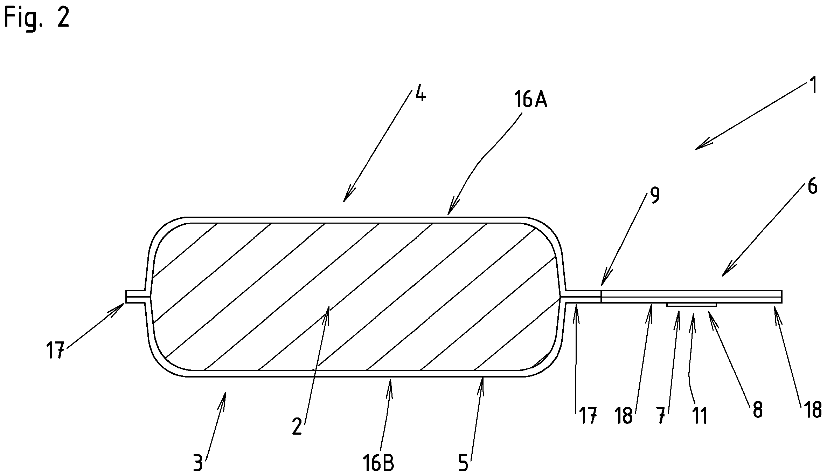

The figures 1A-C and 2 show a first embodiment of the pouched unit 1 according to the invention. The pouched unit 1 comprises a dose of a substance 2 which is enveloped by a main part 3 of a pouch 4 made from a water soluble material 5. The pouch 4 comprises a secondary part 6 made from the water soluble material 5. The secondary part 6 is attached to the main part 3 via a weaker area 9 of the water soluble material 5. The weaker area 9 is configured to allow manual separation of the secondary part 6 from the main part 3. The substance 2 is a food material. More specifically, the substance 2 consists of the food material.

The secondary part 6 allows that a functionality 19, such as a message 7, can be added to pouched unit 1. The weaker area 9 allows that the additional water soluble material 5 of the secondary part 6 of the pouch 4 can manually be removed before the main part 3 of the pouch 4 and its dose of substance 2 is used.

The pouch 4 has a lower tensile strength at the weaker area 9 when compared with the main part 3 and the secondary part 6. This facilitates the manually separation of the secondary part 6 from the main part 3.

The secondary part 6 extends away from the main part 3. This facilitates the addition of a functionality 19 to the secondary part 6.

A message 7 is provided on the secondary part 6. The message 7 comprises user instructions for the user of the pouched unit 1. The message 7 may comprise a text or a symbol 8. The message 7 is provided on the secondary part 6 by a colourant 11. The water soluble material 5 is transparent. In other examples, the water soluble material 5 is translucent, or opaque. The water soluble material 5 may coloured.

The water soluble material 5 is nontoxic. The water soluble material 5 is eatable. The water soluble material 5 is drinkable when dissolved in a liquid. Said liquid may be a water comprising liquid. The substance 2 may be a water soluble substance.
The water soluble material 5 may be a polyvinyl alcohol (PVOH).

The water soluble material 5 has been subjected to a weakening treatment at the weaker area 9. The weaker area 9 comprises multiple incisions 10 in the water soluble material 5. In another example, the weaker area 9 comprises one incision 10 in the water soluble material 5.

The pouch 4 is only formed by the water soluble material 5. This means that the pouch 4 itself only contains the water soluble material 5. It is possible that another material is provided on the pouch, such as a colorant.

The pouch 4 is formed by two interconnected films 16A, 16B of the water soluble material 5. The two films 16A, 16B are transparent.

The main part 3 comprises a main peripheral rim 17. The secondary part 6 comprises a secondary peripheral rim 18. The at least two films 16A, 16B are connected to each other at the main peripheral rim 17, the weaker area 9 and the secondary peripheral rim 18. The weaker area 9 is located between the main peripheral rim 17 and the secondary peripheral rim 18. The main peripheral rim 17 surrounds the substance 2 and the secondary peripheral rim 18 surrounds the message 7.

The method of using the pouched unit 1 comprises holding the main part 3 of the pouch 4 in one hand and holding the secondary part 6 of the pouch 4 in another hand, and manually separating the secondary part 6 from the main part 3 at the weaker area 9.

The method may comprise eating the separated main part 3 of the pouch 4 and the dose of the substance 2.

The method may comprise placing the separated main part 3 of the pouch 4 in a liquid, and drinking the main part 3 of the pouch 4 being dissolved in the liquid and the dose of substance 2.

The method may comprise disposing the secondary part 6 of the pouch 4.

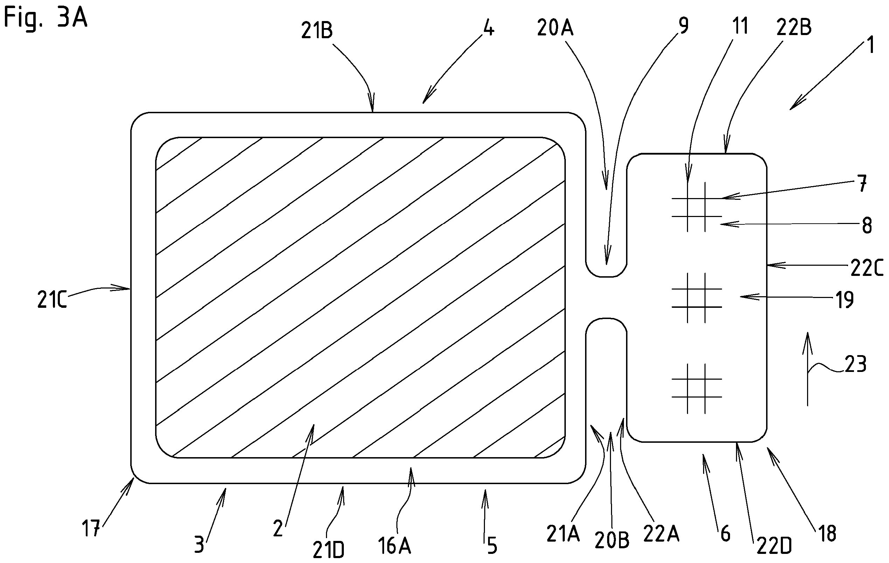

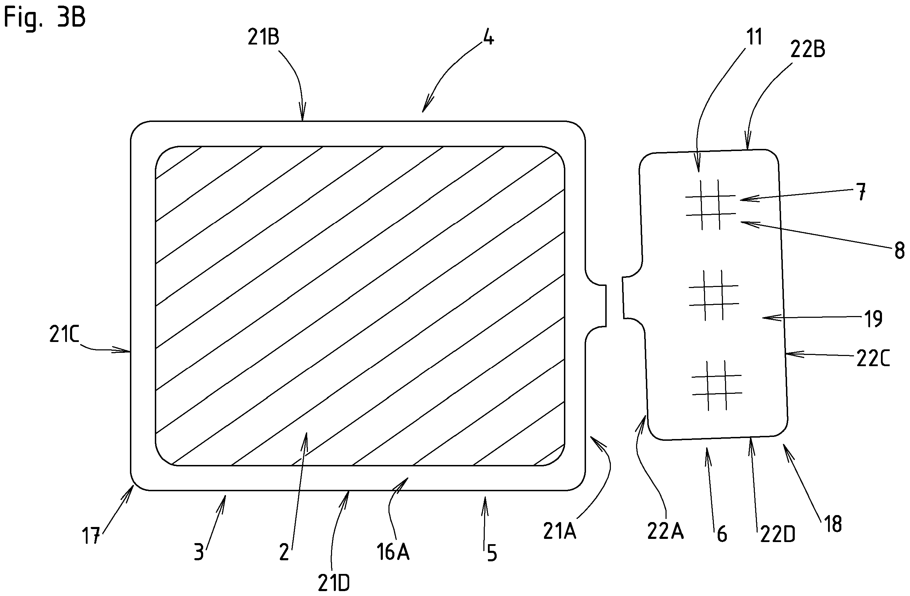

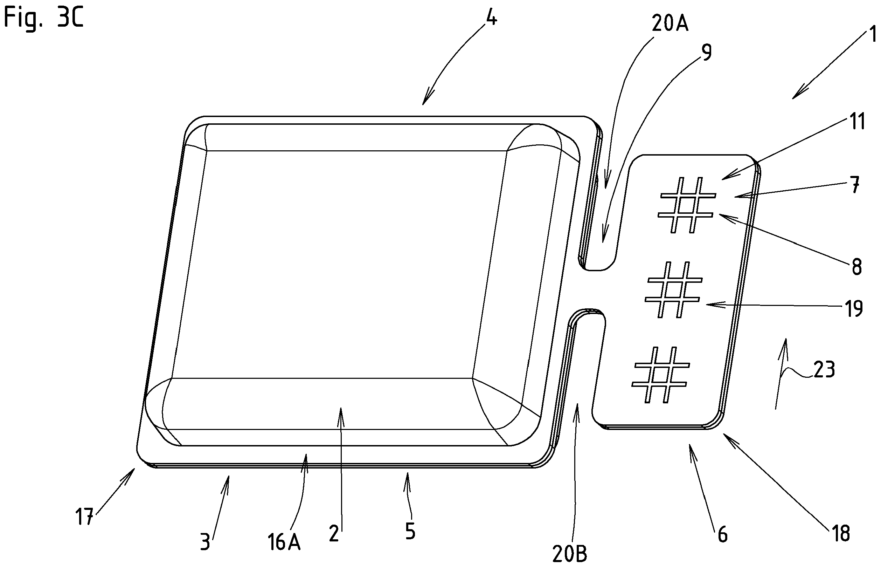

The figures 3A-C show a second embodiment of the pouched unit 1 according to the invention. The substance 2 comprises a food material. The secondary part 6 comprises a mouth freshener. A mouth freshening agent has be provided on or in the water soluble material 5 of the secondary part 6. A first recess 20A and a second recess 20B is provided in the two interconnected films 16A, 16B adjacent to the weaker area 9. The first recess 20A and the second recess 20B extend between the main peripheral rim 17 and the secondary peripheral rim 18. The weaker area 9 is located between the first recess 20A and the second recess 20B.

In another example, only one recess is provided in the two interconnected films 16A, 16B adjacent to the weaker area 9, and the recess extends between the main peripheral rim 17 and the secondary peripheral rim 18.

The main peripheral rim 17 comprises a first main side part 21A, a second main side part 21B, a third main side part 21C, and a fourth main side part 21D. The secondary peripheral rim 18 comprises a first secondary side part 22A, a second secondary side part 22B, a third secondary side part 22C, and a fourth secondary side part 22D. The weaker area 9 is located between the first main side part 21A of the main peripheral rim 17 and the first secondary side part 22A of the secondary peripheral rim 18. The first main side part 21A and the first secondary side part 22A extend in a side part direction 23. The weaker area 9 extends over a smaller distance in the side part direction 23 than each of the first main side part 21A and the first secondary side part 22A.

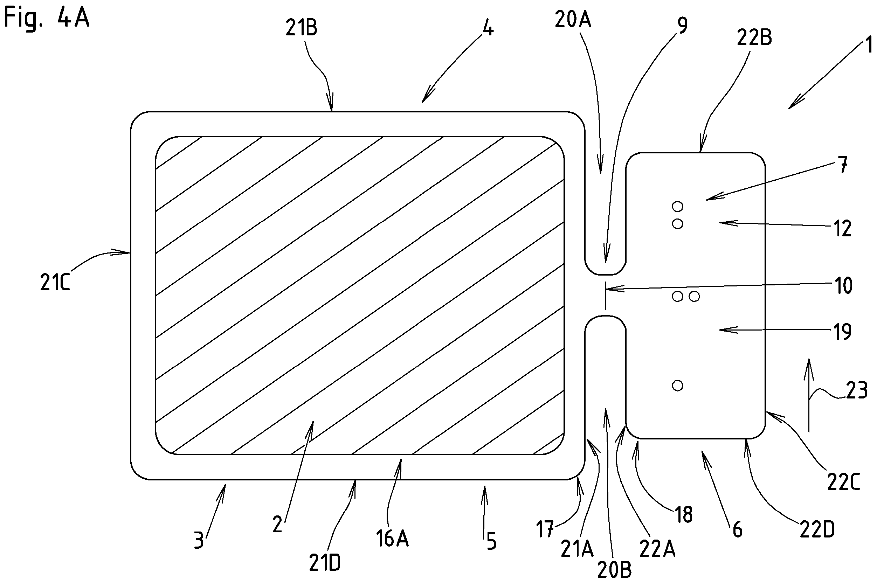

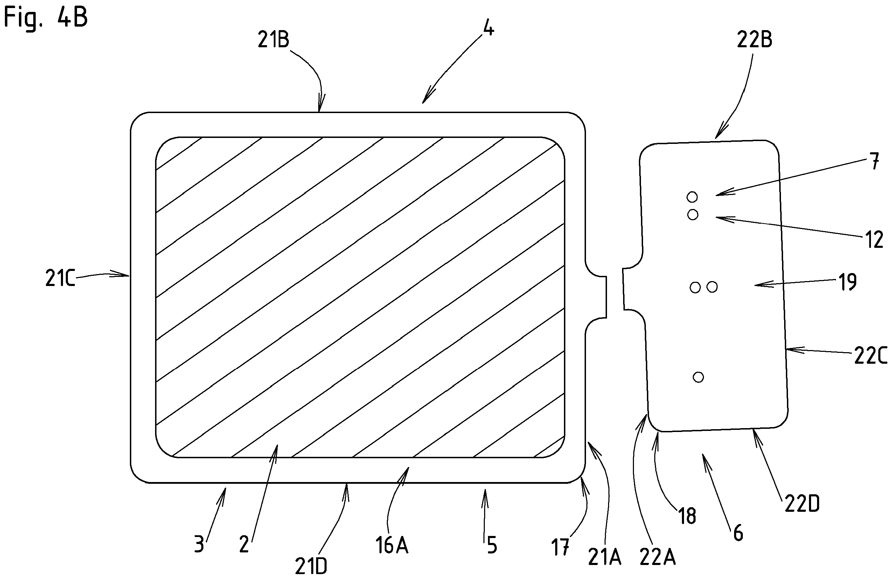

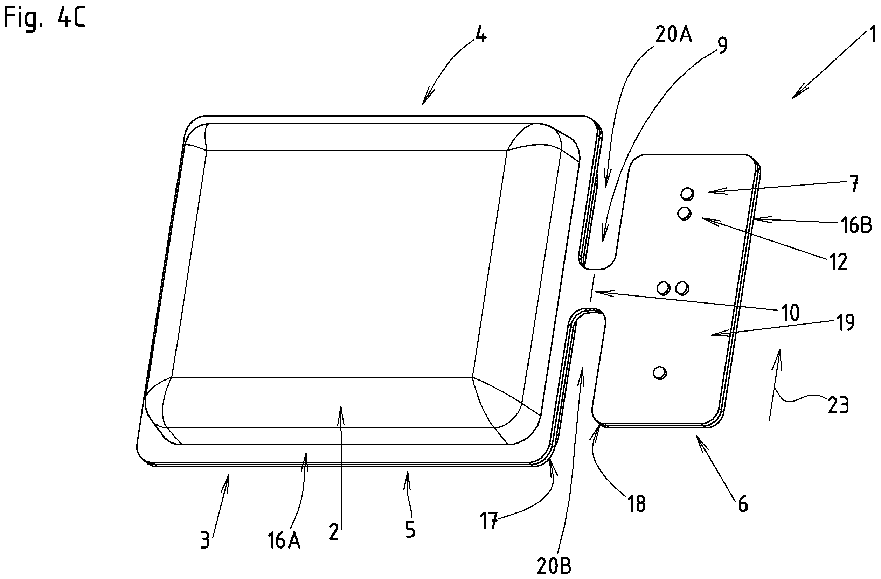

The figures 4A-C shows a third embodiment of the pouched unit 1 according to the invention. Also in this embodiment, the substance 2 comprises a food material.

The message 7 is provided on the secondary part 6 by a relief 12. More specifically, the relief 12 is braille to inform people who are blind or visually impaired. In other examples, the relief 12 has the form of text or as symbol 8.

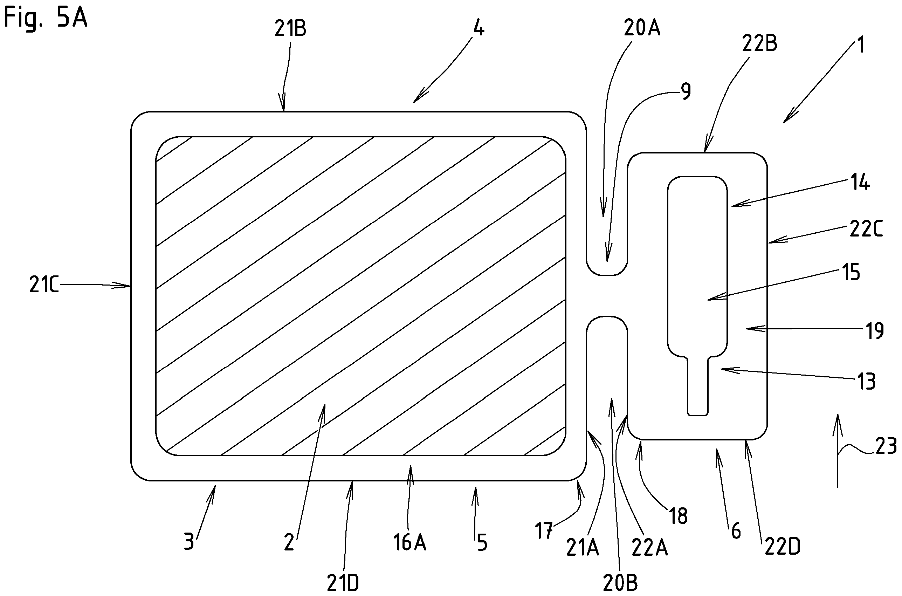

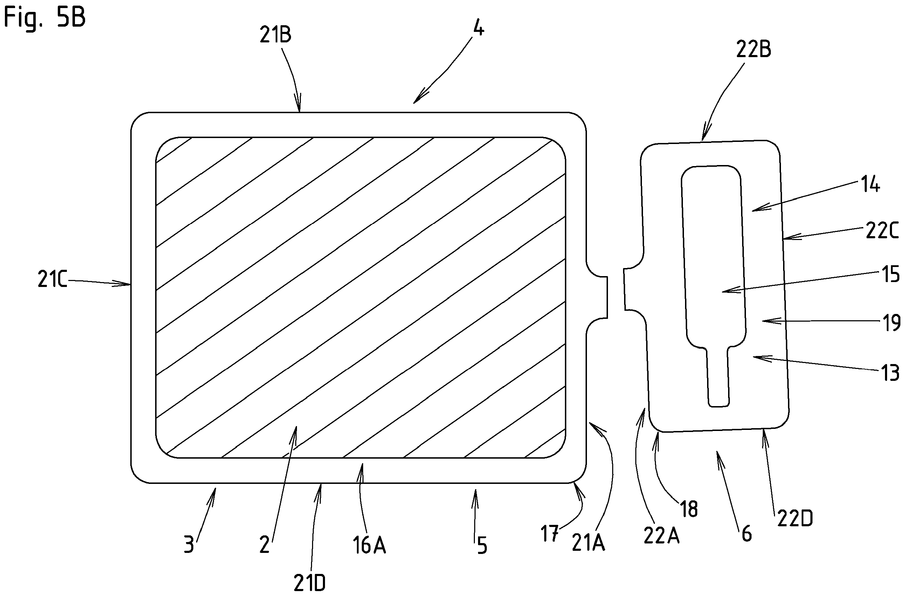

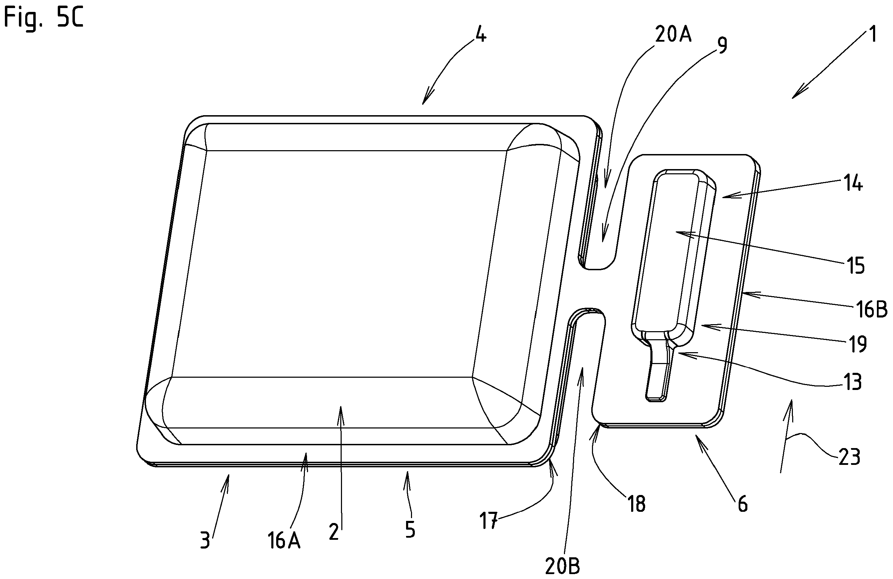

The figures 5A-C shows a front view in a fourth embodiment of the pouched unit 1 according to the invention. The secondary part 6 comprises a flavouring 13. The substance 2 is a food material.
The flavouring 13 is provided in a container 14 formed by the water soluble material 5 of the secondary part 6 and the container 14 holds a flavouring fluid 15. In other examples, the container 14 holds a flavouring powder. The flavouring fluid 15 is a different material than the food material of the dose of substance 2.

The main peripheral rim 17 surrounds the substance 2 and the secondary peripheral rim 18 surrounds the flavouring 13.

The method of using a pouched unit 1 comprises placing at least part of the flavouring 13 of the secondary part 6 on the main part 3 after the secondary part 6 has been manually separated from the main part 3.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

It will be apparent to those skilled in the art that various modifications can be made to the pouched unit and the method without departing from the scope as defined in the claims.

## Claims

1. Pouched unit (1) comprising a dose of a substance (2) which is enveloped by a main part (3) of a pouch (4) made from a water soluble material (5), wherein;
- the pouch comprises a secondary part (6) made from the water soluble material,
- the secondary part is attached to the main part via a weaker area (9) of the water soluble material, which weaker area is configured to allow manual separation of the secondary part from the main part, and
- the substance comprises a food material.

2. Pouched unit according to claim 1, wherein:
- the pouch has a lower tensile strength at the weaker area when compared with the main part and the secondary part.

3. Pouched unit according to claim 1 or 2, wherein a message (7) is provided on the secondary part.

4. Pouched unit according to claim 3, wherein:
- the message comprises a text or a symbol, and/or wherein:
- the message is provided by a colourant (11), and/or wherein:
- the message is provided by a relief (12).

5. Pouched unit according to any one of the preceding claims, wherein the secondary part comprises a flavouring (13) for the food material.

6. Pouched unit according to claim 5, wherein the flavouring comprises a container (14) formed by the water soluble material of the secondary part and the container holds a flavouring fluid (15) or a flavouring powder, and wherein optionally the flavouring is a different material than the food material of the dose of substance.

7. Pouched unit according to any one of the preceding claims, wherein the water soluble material (5) is nontoxic.

8. Pouched unit according to any one of the preceding claims, wherein the water soluble material (5) is eatable.

9. Pouched unit according to any one of the preceding claims, wherein the substance (2) is a water soluble substance.

10. Pouched unit according to any one of the preceding claims, wherein the water soluble material (5) is drinkable when dissolved in a liquid.

11. Pouched unit according to any one of the preceding claims, wherein the secondary part comprises a functionality (19).

12. Method of using a pouched unit according to any one of the preceding claims, comprising;
- holding the main part of the pouch in one hand and holding the secondary part of the pouch in another hand, and
- manually separating the secondary part from the main part at the weaker area.

13. Method according to claim 12, comprising:
- eating the separated main part of the pouch and the dose of the substance, and/or comprising:
- placing the separated main part of the pouch in a liquid, and drinking the main part of the pouch being dissolved in the liquid and the dose of substance.

14. Method according to claim 12, wherein the secondary part comprises a flavouring, and the method comprises placing at least part of the flavouring of the secondary part on the main part after the secondary part has been manually separated from the main part.

15. Method according to claim 13 or 14, comprising disposing the secondary part of the pouch.

## Patentansprüche

1. Beuteleinheit (1), umfassend eine Dosis einer Substanz (2), die von einem Hauptteil (3) eines Beutels (4), der aus einem wasserlöslichen Material (5) hergestellt ist, umhüllt ist, wobei:
- der Beutel einen Sekundärteil (6) umfasst, der aus dem wasserlöslichen Material hergestellt ist,
- der Sekundärteil an dem Hauptteil über einen schwächeren Bereich (9) des wasserlöslichen Materials angebracht ist, wobei der schwächere Bereich eingerichtet ist, eine manuelle Trennung des Sekundärteils von dem Hauptteil zu ermöglichen, und
- die Substanz ein Nahrungsmittelmaterial ist.

2. Beuteleinheit nach Anspruch 1, wobei:
der Beutel eine geringere Zugfestigkeit an dem schwächeren Bereich aufweist im Vergleich zu dem Hauptteil und dem Sekundärteil.

3. Beuteleinheit nach Anspruch 1 oder 2, wobei die Nachricht (7) auf dem Sekundärteil bereitgestellt ist.

4. Beuteleinheit nach Anspruch 3, wobei:
- die Nachricht einen Text oder ein Symbol umfasst, und/oder wobei:
- die Nachricht durch einen Farbstoff (11) bereitgestellt ist, und/oder wobei:
- die Nachricht durch ein Relief (12) bereitgestellt ist.

5. Beuteleinheit nach einem der vorangegangenen Ansprüche, wobei der sekundäre Teil einen Aromastoff (13) für das Nahrungsmittelmaterial umfasst.

6. Beuteleinheit nach Anspruch 5, wobei der Geschmacksstoff einen Behälter (14) umfasst, der durch das wasserlösliche Material des Sekundärteils gebildet wird, und der Behälter eine Geschmacksflüssigkeit (15) oder ein Geschmackspulver enthält, und wobei wahlweise der Geschmacksstoff ein anderes Material ist als das Nahrungsmittelmaterial der Dosis der Substanz.

7. Beuteleinheit nach einem der vorangegangenen Ansprüche, wobei das wasserlösliche Material (5) ungiftig ist.

8. Beuteleinheit nach einem der vorangegangenen Ansprüche, wobei das wasserlösliche Material (5) essbar ist.

9. Beuteleinheit nach einem der vorangegangenen Ansprüche, wobei die Substanz (2) eine wasserlösliche Substanz ist.

10. Beuteleinheit nach einem der vorangegangenen Ansprüche, wobei das wasserlösliche Material (5) trinkbar ist, wenn es in einer Flüssigkeit aufgelöst ist.

11. Beuteleinheit nach einem der vorangegangenen Ansprüche, wobei der Sekundärteil eine Funktionalität (19) umfasst.

12. Verfahren zur Verwendung einer Beuteleinheit nach einem der vorangegangenen Ansprüche, umfassend:
- Halten des Hauptteils des Beutels in einer Hand und Halten des Sekundärteils des Beutels in einer anderen Hand, und
- manuelles Trennen des Sekundärteils von dem Hauptteil an dem schwächeren Bereich.

13. Verfahren nach Anspruch 12, umfassend:
- Essen des abgetrennten Hauptteils des Beutels und der Dosis der Substanz, und/oder umfassend:
- Legen des abgetrennten Hauptteils des Beutels in eine Flüssigkeit, und Trinken des in der Flüssigkeit gelösten Hauptteils des Beutels und der Dosis der Substanz.

14. Verfahren nach Anspruch 12, wobei der Sekundärteil einen Geschmacksstoff umfasst, und das Verfahren das Aufbringen zumindest eines Teils des Geschmacksstoffs des Sekundärteils auf den Hauptteil umfasst, nachdem der Sekundärteil manuell vom Hauptteil getrennt worden ist.

15. Verfahren nach Anspruch 13 oder 14, umfassend das Entsorgen des Sekundärteils des Beutels.

## Revendications

1. Unité ensachée (1) comprenant une dose d'une substance (2) qui est enveloppée par une partie principale (3) d'un sachet (4) faite d'un matériau hydrosoluble (5), dans laquelle ;
- le sachet comprend une partie secondaire (6) réalisée à partir du matériau hydrosoluble,
- la partie secondaire est attachée à la partie principale via une zone plus faible (9) du matériau hydrosoluble, laquelle zone plus faible est configurée pour permettre la séparation manuelle de la partie secondaire de la partie principale, et
- la substance comprend une matière alimentaire.

2. Unité de sachet selon la revendication 1, dans laquelle :
- le sachet présente une résistance à la traction plus faible au niveau de la zone plus faible par rapport à la partie principale et à la partie secondaire.

3. Unité de sachet selon la revendication 1 ou 2, dans laquelle un message (7) est prévu sur la partie secondaire.

4. Unité ensachée selon la revendication 3, dans laquelle :
- le message comprend un texte ou un symbole, et/ou dans laquelle
- le message est fourni par un colorant (11), et/ou dans laquelle :
- le message est fourni par un relief (12).

5. Unité ensachée selon l'une quelconque des revendications précédentes, dans laquelle la partie secondaire comprend un arôme (13) pour la matière alimentaire.

6. Unité ensachée selon la revendication 5, dans laquelle l'arôme comprend un récipient (14) formé par le matériau hydrosoluble de la partie secondaire et le récipient contient un fluide aromatisant (15) ou une poudre aromatisante, et dans laquelle éventuellement l'arôme est un matériau différent du matériau alimentaire de la dose de substance.

7. Unité ensachée selon l'une quelconque des revendications précédentes, dans laquelle le matériau hydrosoluble (5) est non toxique.

8. Unité ensachée selon l'une quelconque des revendications précédentes, dans laquelle le matériau hydrosoluble (5) est consommable.

9. Unité ensachée selon l'une quelconque des revendications précédentes, dans laquelle la substance (2) est une substance hydrosoluble.

10. Unité ensachée selon l'une quelconque des revendications précédentes, dans laquelle le matériau hydrosoluble (5) est buvable lorsqu'il est dissous dans un liquide.

11. Unité ensachée selon l'une quelconque des revendications précédentes, dans laquelle la partie secondaire comprend une fonctionnalité (19).

12. Procédé d'utilisation d'une unité ensachée selon l'une quelconque des revendications précédentes, comprenant ;
- la tenue de la partie principale du sachet dans une main et la tenue de la partie secondaire du sachet dans une autre main, et
- la séparation manuellement la partie secondaire de la partie principale au niveau de la zone plus faible.

13. Procédé selon la revendication 12, comprenant :
- manger la partie principale séparée du sachet et la dose de la substance, et/ou comprenant de :
- placer la partie principale séparée du sachet dans un liquide, et boire la partie principale du sachet dissoute dans le liquide et la dose de substance.

14. Procédé selon la revendication 12, dans lequel la partie secondaire comprend un arôme, et le procédé comprend le fait de placer au moins une partie de l'arôme de la partie secondaire sur la partie principale après que la partie secondaire ait été séparée manuellement de la partie principale.

15. Procédé selon la revendication 13 ou 14, comprenant la mise au rebut de la partie secondaire du sachet.
